# EUROPÄISCHE PATENTANMELDUNG

(11) **EP 1 961 511 A2**
(43) Veröffentlichungstag der Anmeldung: **27.08.2008**
(21) Anmeldenummer: 08100912.8
(22) Anmeldetag: 25.01.2008
(51) Int. Cl.: B23H 7/10, B23H 7/26

(54) **Elektrodenführungseinrichtung, Funkenerosionsvorrichtung mit einer Elektrodenführungseinrichtung sowie Funkenerosionsverfahren**

(30) Priorität: 21.02.2007 DE 102007008382
(71) Anmelder: ROBERT BOSCH GMBH, 70442 Stuttgart (DE)
(72) Erfinder: Schoepf, Martin, 70499, Stuttgart (DE); Schaefer, Bernd, 71636, Ludwigsburg (DE)

(57) **Zusammenfassung**

Die Erfindung betrifft eine Elektrodenführungseinrichtung (3) für eine Elektrode (2), insbesondere in einer Funkenerosionsvorrichtung, mit mindestens einem einen von der Elektrode (2) durchsetzten Führungsbereich (8) begrenzenden Führungsmittel (5). Erfindungsgemäß ist vorgesehen, dass das Führungsmittel (5) band- oder schnurförmig ausgebildet und relativ zu der Elektrode (2) in Richtung seiner Längserstreckung verstellbar angeordnet ist.

## Beschreibung

### Stand der Technik

Die Erfindung betrifft eine Elektrodenführungseinrichtung für eine Elektrode, insbesondere in einer Funkenerosionsvorrichtung (EDM) gemäß dem Oberbegriff des Anspruchs 1, eine Funkenerosionsvorrichtung gemäß Anspruch 9 sowie ein Funkenerosionsverfahren gemäß dem Oberbegriff des Anspruchs 11.

In der DE 10 2004 060 290 A1 ist eine Funkenerosionsvorrichtung beschrieben, bei der die Elektrode in zwei axial voneinander beabstandeten Führungseinrichtungen geführt ist und von einem sich drehenden Magnetfeld in radialer Richtung ausgelenkt sowie in Rotation versetzt wird. Die Führungseinrichtungen umfassen jeweils eine Keramikhülse (Führungsmittel), die einen von der Elektrode durchsetzten Führungsbereich radial außen begrenzt. Die Keramikhülsen sind dabei für bestimmte Elektrodendurchmesser ausgelegt und müssen bei einem Durchmesserwechsel ausgetauscht werden. Ein weiterer Nachteil der bekannten Elektrodenführungseinrichtung besteht darin, dass aufgrund eines im Betrieb auftretenden Verschleißes das Führungsspiel zwischen der in axialer Richtung verstellbaren Elektrode und der sie umgebenden Keramikhülse verändert wird. Dies wiederum führt im Laufe der Bearbeitung zu einer unpräzisen Führung der Elektrode, was negative Auswirkungen auf die Präzision der eigentlichen funkenerosiven Bearbeitung des Werkstückes mit sich bringt.

Neben den beschriebenen keramischen Rundführungen sind Primsa/Deckelanordnungen bekannt, die im Hinblick auf den während der Bearbeitung auftretenden Verschleiß dieselben Nachteile mit sich bringen.

Ferner ist aus der DE 10 2005 501 5105 A1 eine Elektrodenführungseinrichtung für eine Elektrode zur funkenerosiven Bearbeitung eines Werkstücks bekannt, die drei Führungselemente umfasst, die rotationssymmetrisch um die Elektrode angeordnet sind. Auch hier bestehen Probleme hinsichtlich des Verschleißes der Führungselemente.

### Offenbarung der Erfindung

### Technische Aufgabe

Der Erfindung liegt daher die Aufgabe zugrunde, eine verbesserte Elektrodenführungseinrichtung vorzuschlagen, mit der dauerhaft eine präzise Führung der Elektrode möglich ist. Ferner besteht die Aufgabe darin eine Funkenerosionsvorrichtung mit einer verbesserten Elektrodenführungseinrichtung sowie ein Funkenerosionsverfahren vorzuschlagen, mit dem eine dauerhaft präzise funkenerosive Bearbeitung eines Werkstücks möglich ist.

### Technische Lösung

Diese Aufgabe wird hinsichtlich der Elektrodenführungseinrichtung mit den Merkmalen des Anspruchs 1, hinsichtlich der Funkenerosionsvorrichtung mit den Merkmalen des Anspruchs 9 und hinsichtlich des Funkenerosionsverfahrens mit den Merkmalen des Anspruchs 11 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen.

Der Erfindung liegt der Gedanke zugrunde, die eigentliche Elektrodenführung mittels eines band- oder schnurförmigen, sowie flexiblen Führungsmittels zu realisieren, welches relativ zu der Elektrode in Richtung seiner Längserstreckung verstellbar ist. Anders ausgedrückt wird gemäß der Erfindung der von der Elektrode durchsetzte Führungsbereich radial außen nicht mittels einer Führungshülse begrenzt, sondern von einem länglichen, drahtförmigen Führungsmittel, das mittels geeigneter Verstellmittel aus dem Begrenzungsbereich des eigentlichen Führungsbereichs heraus bewegbar ist. Nach einer Verstellung des Führungsmittels in Richtung seiner Längserstreckung wird der die Elektrode umgebende Führungsbereich von einem anderen (nicht verschlissenen) Abschnitt des Führungsmittels begrenzt. Im Rahmen der Erfindung liegt es zur Begrenzung des Führungsbereichs ein einziges Führungsmittel oder mehrere Führungsmittel vorzusehen, wobei im Falle des Vorsehens mehrerer band- oder schnurförmiger Führungsmittel jedes der Führungsmittel in Richtung seiner Längserstreckung verstellbar sein sollte. Die erfindungsgemäß ausgebildete Elektrodenführungseinrichtung ermöglicht es eine auf gewisse Art verschleißfreie Präzisionsführung der Elektrode zu realisieren, da das Führungsmittel in bestimmten Zeitintervallen oder nach der Detektierung eines Verschleißes des Führungsmittels in einem den Führungsbereich begrenzenden Abschnitt, beispielsweise verursacht durch eine Axialverstellung oder Auslenkung der Elektrode, in Längsrichtung verstellbar ist, so dass der verschlissene Abschnitt aus dem Führungsbereich heraustransportiert wird und somit den Führungsbereich nicht mehr begrenzt. Der im Führungsmittel auftretende Verschleiß kann also durch eine Verstellung des Führungsmittels relativ zu der Drahtelektrode auf einfache Weise kompensiert werden. Dabei ist das Führungsmittel mit Vorteil derart angeordnet, dass es quer zur Längserstreckung der Elektrode, insbesondere in Umfangsrichtung um die Elektrode verstellbar angeordnet ist.

Zur definierten radial äußeren Begrenzung des Führungsbereichs ist das mindestens eine Führungsmittel oder sind mehrere Führungsmittel an jeweils mindestens einem Spannmittel geführt bzw. radial nach innen in Richtung der Elektrode kraftbeaufschlagt, wobei der eigentliche Führungsbereich von einem an einer radial inneren "Spitze" der Spannmittel (radial innerer Bereich) anliegenden Abschnitt des oder der Führungsmittel begrenzt wird. Um eine symmetrische Führung der Elektrode zu gewährleisten, ist es von Vorteil, wenn mehrere, insbesondere in Umfangsrichtung gleichmäßig beabstandete Spannmittel vorgesehen sind. Das Vorsehen eines band- oder schnurförmig ausgebildeten, länglichen Führungsmittels ermöglicht es auch auf einfache Weise einen im Durchmesser variablen Führungsbereich zu realisieren. Bevorzugt sind die Spannmittel hierzu in radialer Richtung verstellbar angeordnet, um dadurch den Durchmesser des Führungsbereichs variieren zu können. Von Vorteil ist es dabei, wenn die Verstellbewegung sämtlicher Spannmittel synchronisiert erfolgt. Aufgrund der beschriebenen Ausgestaltung der Erfindung ist es nicht länger notwendig, bei einem Wechsel zwischen Elektroden mit unterschiedlichen Durchmessern auch die Elektrodenführungseinrichtung auszuwechseln.

Von Vorteil ist eine Ausführungsform, bei der ein einziges Führungsmittel mehrere in Umfangsrichtung beabstandete, den Führungsbereich radial außen begrenzende Abschnitte umfasst. Je nach beabsichtigter Führungsgenauigkeit liegt das Führungsmittel mittels dieser Abschnitte am Außenumfang der Elektrode an oder die Führungsabschnitt halten zumindest bereichsweise ein Radialspiel zur Elektrode ein. Die den Führungsbereich begrenzenden Abschnitte des Führungsmittels können durch Verstellen des Führungsmittels in Richtung seiner Längserstreckung aus dem Begrenzungsbereich abtransportiert werden, so dass der Führungsbereich von neuen, nicht verschlissnen Abschnitten des Führungsmittels präzise begrenzt wird. Alternativ können die den Führungsbereich begrenzende Abschnitte zumindest teilweise von unterschiedlichen Führungsmitteln bereitgestellt werden. Von Vorteil ist eine Ausführungsform, bei der das Führungsmittel den Führungsbereich mit drei gleichmäßig über den Umfang verteilten Abschnitten begrenzt.

Insbesondere zur Realisierung einer Begrenzung des Führungsbereichs mit nur einem einzigen Führungsmittel ist es von Vorteil, mindestens ein Umlenkmittel, vorzugsweise mehrere, insbesondere gleichmäßig über den Umfang der Elektrode verteilte Umlenkmittel, insbesondere Umlenkrollen vorzusehen, mit denen ein radial nach außen verlaufendes Führungsmittel zurück in Richtung der Elektrode umlenkbar ist. Bei einem bevorzugten Ausführungsbeispiel ist das Führungsmittel um mehrere, vorzugsweise zwei Umlenkrollen geführt und wird von drei radial verstellbaren Spannmitteln in Richtung der Elektrode kraftbeaufschlagt.

Um eine Verstellung des Führungsmittels in Richtung seiner Längserstreckung zu ermöglichen, ist es von Vorteil entsprechende Aufwickel- und/oder Abwickelmittel vorzusehen. Bevorzugt ist ein insbesondere als Spule ausgebildetes kombiniertes Aufwickel- und Abwickelmittel für das Führungsmittel vorgesehen, wobei jedoch auch separate Spulen vorgesehen werden können. Daneben sind andere Verstellmittel denkbar, mit denen das Führungsmittel, insbesondere ziehend in Richtung seiner Längserstreckung relativ zu der Elektrode verstellbar ist.

Von Vorteil ist eine Ausführungsform, bei der das Führungsmittel und/oder ein an dem Führungsmittel anliegender Bereich des Spannmittels aus einem elektrisch nicht-leitenden Material ausgebildet oder mit einem elektrisch nicht-leitenden Material beschichtet sind/ist. Als Führungsmittel eignet sich beispielsweise ein elektrisch leitender Metalldraht, insbesondere ein an sich bekannter Schneiddraht, wobei dann die Spannmittel und die Umlenkmittel bzw. ein das Führungsmittel kontaktierender Bereich der Spannmittel oder der Umlenkmittel bevorzugt aus einem nicht-leitenden Material (Isolator), insbesondere Keramik ausgebildet sind oder beispielsweise mit einem elektrisch nicht-leitenden Kunststoff beschichtet sind. Weiterhin sind als Materialien zur Ausbildung des Führungsmittels und/oder die Umlenkmittel und/oder die Spannmittel Kunststoffe, wie beispielsweise Nylon oder Polyäthylen geeignet. Ebenso ist es denkbar das Führungsmittel als einfadigen Monofil-Draht bzw. Schnur auszubilden. Als Beschichtungen sind beispielsweise Teflon oder spezielle Thermoversiegelungsbeschichtungen anwendbar.

Die erfindungsgemäße Funkenerosionsvorrichtung zeichnet sich dadurch aus, dass sie mindestens eine zuvor beschriebene Elektrodenführungseinrichtung umfasst. Bevorzugt sind mehrere Elektrodenführungseinrichtungen in axialer Richtung beabstandet entlang der Längserstreckung der Elektrode zur Gewährleistung einer präzisen Elektrodenführung angeordnet.

Gemäß dem erfindungsgemäßen Funkenerosionsverfahren wird das mindestens eine den Führungsbereich für die Elektrode begrenzende Führungsmittel zeitweise in Längsrichtung relativ zu der Elektrode verstellt. Das Verstellen kann beispielsweise in Abhängigkeit der Detektierung eines Verschleißes mittels eines geeigneten Sensors erfolgen, manuell ausgelöst oder automatisch in festen oder variablen Zeitabständen durchgeführt werden.

### Kurze Beschreibung der Zeichnungen

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1:: eine schematische Darstellung einer Funkenerodiermaschine und
- Fig. 2:: eine schematische Darstellung des Aufbaus einer Elektrodenführungseinrichtung für einen Funkenerodiermaschine.

### Ausführungsformen der Erfindung

In den Figuren sind gleiche Bauteile und Bauteile mit der gleichen Funktion mit den gleichen Bezugszeichen gekennzeichnet.

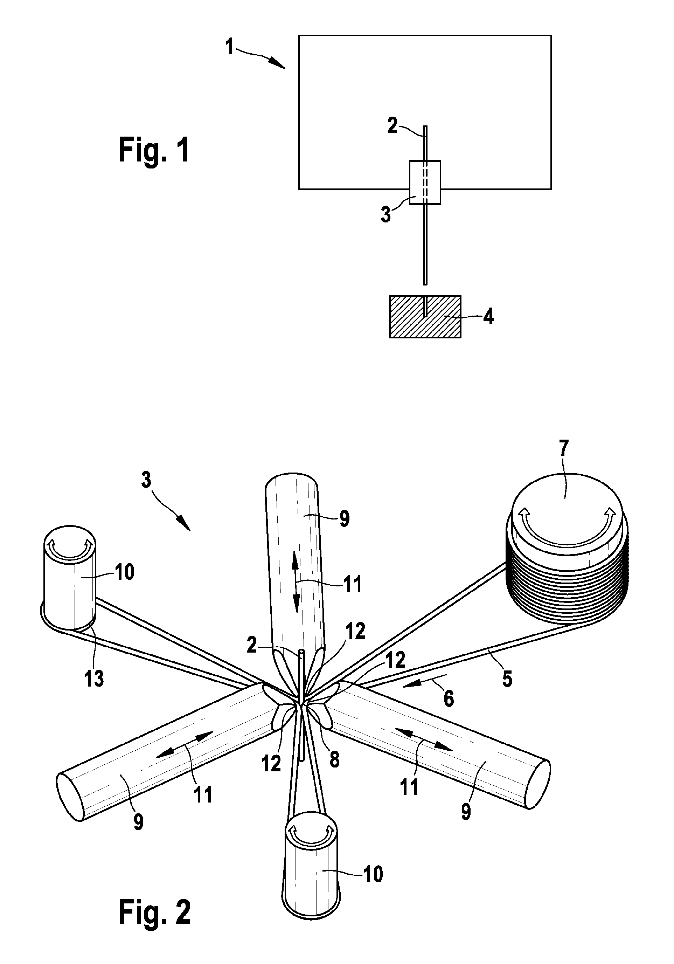

In Fig. 1 ist stark schematisiert eine Funkenerosionsvorrichtung 1 gezeigt. Diese umfasst eine insbesondere von einem sich zeitlich ändernden elektrischen Strom durchflossene Elektrode 2 mit vorzugsweise kreisförmiger oder rechteckiger Querschnittskontur. Die Elektrode 2 durchsetzt in axialer Richtung eine schematisch angedeutete Elektrodenführungseinrichtung 3 in Richtung eines Werkstückes 4 in welches, insbesondere unter Beaufschlagung mit einem Dielektrikum Bohrungen eingebracht werden. Vorzugsweise zur Herstellung von konischen Bohrungen ist es zusätzlich denkbar, nicht gezeigte Auslenkmittel zur radialen Auslenkung und/oder Rotation der Elektrode, insbesondere axial zwischen zwei Elektrodenführungseinrichtungen, vorzusehen.

In Fig. 2 ist eine hoch flexible Elektrodenführungseinrichtung 3 gezeigt. Ein in diesem Ausführungsbeispiel als Draht mit kreisrundem Querschnitt ausgebildetes längliches, flexibles Führungsmittel 5 wird in Pfeilrichtung 6 von einer Spule 7 abgewickelt und nach Durchlaufen des Systems wieder auf die Spule 7 aufgewickelt. Die Spule 7 bildet also kombinierte Abwickel- und Aufwickelmittel. Bei Bedarf können zu diesem Zweck auch separate Spulen vorgesehen werden. Zur Vollführung ihrer Abwickel- und Aufwickelfunktion ist die Spule 7 mittels eines nicht gezeigten Elektrodemotors drehend betätigbar.

Mittels des Führungsmittels 5 wird ein von der Elektrode 2 in axialer Richtung durchsetzter Führungsbereich 8 radial außen begrenzt. Zu diesem Zweck ist das Führungsmittel 5 von drei gleichmäßig um jeweils 120° zueinander beabstandeten als Spannmittel 9 dienenden Zuführstiften in radialer Richtung nach innen, also in Richtung der Elektrode 2 kraftbeaufschlagt. Mit Hilfe der Spannmittel 9 und zwei jeweils mittig zwischen zwei in Umfangsrichtung benachbarten Spannmitteln 9 angeordneten, als Umlenkrollen ausgebildeten Umlenkmitteln 10 wird das Führungsmittel 5 zusätzlich gespannt. Zur Halterung bzw. zur Führung des Führungsmittels 5 sind die Spannmittel 9 an ihrer radial inneren "Spitze" mit geeigneten Führungseinrichtungen versehen. Die "Spitze" kann beispielsweise auch von einer Rolle gebildet werden.

Die Spannmittel 9 sind in Pfeilrichtung 11, also in radialer Richtung verstellbar angeordnet, wobei die Bewegung der Spannmittel 9 bevorzugt gekoppelt ist, um eine gleichmäßige (synchrone) Verstellung der Spannmittel 9 zu gewährleisten. Durch radiales Verstellen der Spannmittel 9 kann die Größe des Führungsbereichs 8 also ein Führungsdurchmesser auf das gewünschte Führungsspiel zwischen der Elektrode 2 und dem Führungsmittel 5 bzw. auf den gewünschten Elektrodendurchmesser der Elektrode 2 eingestellt werden. Soll der Elektrodendurchmesser beispielsweise um einen Wert X vergrößert werden, müssen die Spannmittel 9 jeweils lediglich um den Wert X/2 von der Elektrode entfernt werden, um das Führungsspiel beizubehalten. Bei einer Durchmesserverringerung um den Wert X müssen die Spannmittel 9 entsprechend radial nach innen (vorzugsweise synchronisiert) und die Strecke X/2 verstellt werden.

Während des Erodierprozesses liegt die Elektrode 2 zumindest zeitweise u.a. durch eine radiale Auslenkung an den den Führungsbereich 8 begrenzenden Abschnitten 12 der Führungsmittel 5 im Bereich der radial inneren Spitzen der Spannmittel 9 an. Insbesondere durch die radiale Auslenkung der Elektrode 2 und/oder eine axiale Verstellung der Elektrode 2 kommt es auf Dauer zu einem Verschleiß zumindest einiger der den Führungsbereich 8 begrenzenden Abschnitte 12 des Führungsmittels 5. Durch Verstellen des Führungsmittels 5 in Pfeilrichtung 6, also in Richtung der Längserstreckung des Führungsmittels 5, insbesondere durch elektromotorische Betätigung der Spule 7 werden die verschlissenen Abschnitte 12 aus dem Randbereich des Führungsbereichs abtransportiert und durch nicht verschlissene Begrenzungsabschnitte des Führungsmittels 5 ersetzt.

Die Umlenkmittel 10 können bei Bedarf elektromotorisch angetrieben sein, wobei auf einen elektromotorischen Antrieb jedoch in der Regel verzichtet werden kann. Bevorzugt ist das Führungsmittel 5 in jeweils einer entsprechenden Rille 13 in Umfangsrichtung entlang der Umlenkmittel 10 geführt. Alternativ zu dem gezeigten Führungsmittel 9 mit kreisförmigen Querschnitt können andere Führungsmittel, beispielsweise mit rechteckiger, insbesondere bandförmiger Querschnittsfläche eingesetzt werden, um eine großflächigere Führung der Elektrode 2 zu gewährleisten.

Anstelle der als Zuführstifte ausgebildeten Spannmittel 9 können beispielsweise auch als Spannrollen ausgebildete, vorzugsweise ebenfalls radial verstellbare Spannmittel 9 vorgesehen werden.

Im gezeigten Ausführungsbeispiel ist das Führungsmittel 5 aus Metall ausgebildet, so dass die radial inneren "Spitzen" der Spannmittel 9 sowie zumindest die Rillen 13 der Umlenkmittel 10 aus einem elektrisch nicht leitenden Material ausgebildet sind.

## Patentansprüche

1. Elektrodenführungseinrichtung für eine Elektrode, insbesondere in einer Funkenerosionsvorrichtung (1), mit mindestens einem, einen von der Elektrode (2) durchsetzten Führungsbereich (8) begrenzenden Führungsmittel (5),
**dadurch gekennzeichnet,**
**dass** das Führungsmittel (5) band- oder schnurförmig ausgebildet und relativ zu der Elektrode (2) in Richtung seiner Längserstreckung verstellbar angeordnet ist.

2. Elektrodenführungseinrichtung nach Anspruch 1,
**dadurch gekennzeichnet,**
**dass** zur Variation der Größe des Führungsbereichs (9) mindestens ein, insbesondere in radialer Richtung verstellbares, Spannmittel (9) für das Führungsmittel (5) vorgesehen ist.

3. Elektrodenführungseinrichtung nach Anspruch 2,
**dadurch gekennzeichnet,**
**dass** mehrere, vorzugsweise gleichmäßig in Umfangsrichtung beabstandete, insbesondere synchronisiert verstellbare Spannmittel (9) vorgesehen sind.

4. Elektrodenführungseinrichtung nach einem der vorhergehenden Ansprüche,
**dadurch gekennzeichnet,**
**dass** das Führungsmittel (5) mehrere, vorzugsweise gleichmäßig in Umfangsrichtung beabstandete, den Führungsbereich (8) begrenzende Abschnitte (12) umfasst.

5. Elektrodenführungseinrichtung nach einem der vorhergehenden Ansprüche,
**dadurch gekennzeichnet,**
**dass** Umlenkmittel (10) zum Umlenken des Führungsmittels (5) in Richtung der Elektrode(2) vorgesehen sind.

6. Elektrodenführungseinrichtung nach einem der vorhergehenden Ansprüche,
**dadurch gekennzeichnet,**
**dass** zum Verstellen des Führungsmittels (5) relativ zu der Elektrode (2) Aufwickel- und/oder Abwickelmittel vorgesehen sind.

7. Elektrodenführungseinrichtung nach Anspruch 6,
**dadurch gekennzeichnet,**
**dass** ein, insbesondere als Spule (7) ausgebildetes, kombiniertes Aufwickel- und Abwickelmittel vorgesehen ist.

8. Elektrodenführungseinrichtung nach einem der vorhergehenden Ansprüche,
**dadurch gekennzeichnet,**
**dass** das Führungsmittel (5) und/oder ein an dem Führungsmittel (5) anliegender Bereich des Spannmittels (9) und/oder das Umlenkmittel (10) aus einem elektrisch nicht leitenden Material ausgebildet oder mit einem elektrisch nicht leitenden Material beschichtet sind/ist.

9. Funkenerosionsvorrichtung mit mindestens einer Elektrodenführungseinrichtung (3) nach einem der vorhergehenden Ansprüche.

10. Funkenerosionsvorrichtung nach Anspruch 9,
**dadurch gekennzeichnet,**
**dass** entlang der Elektrode (2) mehrere in axialer Richtung beabstandete Elektrodenführungseinrichtungen (3) vorgesehen sind.

11. Funkenerosionsverfahren zur Bearbeitung eines Werkstücks (4), wobei eine Elektrode (2) von einem elektrischen Strom durchflossen ist und die Elektrode (2) in mindestens einer Elektrodenführung mit den Merkmalen eines der Ansprüche 1 bis 8 geführt ist,
**dadurch gekennzeichnet,**
**dass** das mindestens eine Führungsmittel (5), insbesondere in festen oder variablen Zeitabständen oder nach Detektierung eines Verschleißes des Führungsmittel (5), relativ zu der Elektrode (2) verstellt wird.
